# EUROPÄISCHE PATENTSCHRIFT

(11) **EP 3 568 685 B1**
(45) Veröffentlichungstag und Bekanntmachung des Hinweises auf die Patenterteilung: **12.02.2025**
(21) Anmeldenummer: 17808799.5
(22) Anmeldetag: 14.11.2017
(51) Int. Cl.: G01M 3/32

(54) **PRÜFVORRICHTUNG, INSBESONDERE FÜR PHARMAZEUTISCHE ERZEUGNISSE, MIT VERBESSERTER MESSQUALITÄT**
TEST APPARATUS, IN PARTICULAR FOR PHARMACEUTICAL PRODUCTS, HAVING AN IMPROVED MEASUREMENT QUALITY
DISPOSITIF DE CONTRÔLE, DESTINÉ NOTAMMENT À DES PRODUITS PHARMACEUTIQUES, À QUALITÉ DE MESURE AMÉLIORÉE

(30) Priorität: 13.01.2017 DE 102017200523; 19.01.2017 DE 102017200850
(43) Veröffentlichungstag der Anmeldung: 20.11.2019
(73) Patentinhaber: Syntegon Technology GmbH, 71332 Waiblingen (DE)
(72) Erfinder: MAURISCHAT, Wolfgang, 74589 Satteldorf (DE); PETER, Thomas, 8302 Kloten (CH); DRESCHER, Lucien Matthias, 70435 Stuttgart-Zuffenhausen (DE); SCHINDLER, Wolfram, 74592 Kirchberg (DE)
(74) Vertreter: Novagraaf Group
(86) Internationale Anmeldenummer: PCT/EP2017/079100
(87) Internationale Veröffentlichungsnummer: WO 2018/130323

(56) Entgegenhaltungen:
- EP-A1- 2 784 465
- WO-A1-2016/140736
- CA-A1- 2 648 041
- DE-A1- 2 458 137
- DE-A1- 4 441 182
- US-A- 2 784 373
- US-A- 5 029 464
- US-A- 5 170 660
- US-A- 5 861 546
- US-A1- 2011 174 060

## Beschreibung

### Stand der Technik

Die vorliegende Erfindung betrifft eine Prüfvorrichtung, insbesondere zum Prüfen von pharmazeutischen Behältnissen auf Dichtheit, mit einer signifikant verbesserten Messqualität.

Insbesondere bei pharmazeutischen Erzeugnissen, welche in Behältnissen abgefüllt sind, muss aus medizinischen Gründen eine Überprüfung hinsichtlich einer Dichtheit der Behältnisse durchgeführt werden. Hierbei sind grundsätzlich die Möglichkeiten einer Dichtheitsprüfung mit Überdruck oder mit Unterdruck möglich. Hierzu wird ein bei Normaldruck befülltes und verschlossenes Behältnis in einer geschlossenen Kammer, beispielsweise unter Vakuum gesetzt. Dann wird eine gewisse Zeitspanne gewartet und eine Druckänderung pro Zeiteinheit im Vakuumbereich der geschlossenen Kammer gemessen. Wenn der Vakuumdruck einer definierten Charakteristik folgt, ist dies ein Kennzeichen für ein dichtes Behältnis. Wenn der Vakuumdruck allerdings davon abweicht, ist dies unter Annahme einer dichten Kammer ein Zeichen für eine Undichtheit des Behältnisses, weil über undichte Stellen im Behältnis, beispielsweise Löcher oder Risse, etc., ein messbarer Druckausgleich zwischen dem Innenraum des Behältnisses und der Vakuumkammer erfolgt. Bei einer Dichtheitsprüfung mit Überdruck kommt es bei einem undichten Behältnis und unter der Annahme einer dichten Prüfkammer zu einem Druckabfall in der Kammer, da das Druckmedium über den Riss oder dgl. in das Innere des Behältnisses gelangt und somit ein Druckausgleich stattfindet. Die bekannten Verfahren sind hierbei zur Einzelmessung von Behältnissen ausgelegt, jedoch nicht in einer pharmazeutischen Massenherstellung einsetzbar. Um ein Prüfverfahren wirtschaftlich durchführen zu können, ist aus der DE 3925494 A1 ein gleichzeitige Überprüfung mehrerer Behältnisse in einer Kammer offenbart. Hierbei ergibt sich jedoch das Problem, dass, wenn eines der Behältnisse undicht ist, die gesamten geprüften Behältnisse, welche sich ebenfalls in der Prüfkammer befanden, als undicht angesehen werden müssen und alle Behältnisse entsorgt werden müssen. Dies ist jedoch eine Ressourcen-Verschwendung, da, wenn nur eines der Behältnisse undicht ist, die anderen Behältnisse eigentlich verwendbar gewesen wären. Weiterhin ist aus der US 8544315 B2 ein weiteres Verfahren zum Prüfen von Behältnissen auf Dichtheit bekannt. Mit den bekannten Verfahren können relativ gut große Lecks erfasst werden. Die Erfassung von sehr kleinen Lecks ist jedoch häufig schwierig. Ferner zeigt US 2011/174060 A1 ein Verfahren und eine Vorrichtung zur Dichtheitsprüfung von flüssigen und nicht flüssigkeitsgefüllten starren und halbstarren nichtporösen Behältern, wobei ein Behälter in einer entsprechenden Prüfkammer eingeschlossen und einem Vakuum ausgesetzt wird, während der Druck innerhalb der Kammer allein durch einen Absolutdruckwandler überwacht wird oder in Kombination mit einem zweiten Differenzwandler, um festzustellen, ob undichte Stellen in dem Behälter vorhanden sind.

### Offenbarung der Erfindung

Die erfindungsgemäße Prüfvorrichtung mit den Merkmalen des Anspruchs 1 weist demgegenüber den Vorteil auf, dass eine Prüfung eines Behältnisses auf Dichtheit in zwei Stufen durch eine Grobleckmessung und eine Feinleckmessung möglich ist, wobei die Grobleckmessung von der Feinleckmessung entkoppelt werden kann. Weiterhin kann ein Spülen der Prüfvorrichtung nach einem erfolgten Messvorgang ausgeführt werden, wodurch Feuchtigkeit oder Verunreinigungen oder Wärme oder dgl. aus der Prüfvorrichtung entfernt werden können. Hierdurch kann erfindungsgemäß eine sehr hohe Präzision und insbesondere auch eine höchste Wiederholungsgenauigkeit einer Prüfmessung erhalten werden. Dies wird erfindungsgemäß dadurch erreicht, dass die Prüfvorrichtung einen Prüfanschluss aufweist, welcher eingerichtet ist, mit einer Prüfkammer verbunden zu werden, in welcher ein auf Dichtheit zu prüfendes Behältnis aufgenommen ist. Das Behältnis ist vorzugsweise ein medizinisches Behältnis, wie z.B. eine Ampulle oder ein Vial oder dgl. Ferner umfasst die Prüfvorrichtung eine Unterdruckquelle, welche mit dem Prüfanschluss über eine erste Leitung verbunden ist. Die Unterdruckquelle ist vorzugsweise ein Verdichter. Weiterhin umfasst die Prüfvorrichtung einen ersten Sensor für eine Grobleckmessung und einen zweiten Sensor für eine Feinleckmessung. Der erste Sensor ist an der ersten Leitung angeordnet und der zweite Sensor ist an einer zweiten Leitung angeordnet, welche von der ersten Leitung abzweigt. Ferner ist eine dritte Leitung vorgesehen, welche von der ersten oder zweiten Leitung abzweigt und zu einem Spülanschluss führt. Über den Spülanschluss kann dann nach erfolgter Messung ein Spülen der Prüfvorrichtung mit einem Spülmedium erfolgen. In der dritten Leitung ist dabei ein drittes Ventil angeordnet, welche die Verbindung zum Spülanschluss freigibt und verschließt. Somit kann erfindungsgemäß das Problem gelöst werden, dass bei Einlegen eines zu prüfenden Behältnisses in die Prüfvorrichtung Verunreinigungen in die Prüfvorrichtung eingebracht werden können. Ferner wird die Grobleckmessung von der Feinleckmessung entkoppelt, so dass die Anordnungen zur Feinleckmessung nicht verunreinigt werden. Nach erfolgter Grobleckmessung, wenn kein Grobleck erfasst wird, wird dann die Feinleckmessung durchgeführt, wobei die zur Feinleckmessung benötigten Bereiche der Prüfvorrichtung aufgrund der Entkoppelung keine Verunreinigungen aufweisen. Nach erfolgter Feinleckmessung kann dann ein Spülen über den Spülanschluss der Prüfvorrichtung erfolgen, so dass für die nächste Prüfung wieder ein reines System zur Verfügung steht. Somit kann durch den gezielten Einsatz von mehreren Ventilen eine Sensitivität während der Feinleckmessung durch eine Reduktion des Referenzvolumens, in welchem die Feinleckmessung stattfindet, erhöht werden. Um einen möglichst einfachen Aufbau mit wenigen Ventilen zu erreichen, zweigt weiterhin die zweite Leitung von der ersten Leitung in einen Bereich zwischen dem Prüfanschluss und dem zweiten Ventil ab.

Die Unteransprüche zeigen bevorzugte Weiterbildungen der Erfindung.

Vorzugsweise ist der erste Sensor am Zwischenleitungsbereich der ersten Leitung zwischen dem ersten und zweiten Ventil angeordnet.

Weiter bevorzugt umfasst die Prüfvorrichtung ein definiertes Vorvolumen, welches zwischen dem ersten Sensor zur Grobleckmessung und der ersten Leitung angeordnet ist. Durch das definierte Vorvolumen ist es möglich, dass bei der Grobleckmessung ein Risiko einer Verschmutzung des ersten Sensors zur Grobleckmessung reduziert ist. Falls ein Behältnis ein Grobleck aufweisen sollte, kann das definierte Vorvolumen, welches in Strömungsrichtung vor dem ersten Sensor zur Grobleckmessung angeordnet ist, die Verschmutzung aufnehmen, so dass der erste Sensor nicht mit dem aus dem Behältnis austretenden Medium in Kontakt kommt.

Das Vorvolumen ist dabei bevorzugt größer als ein Volumen der ersten Leitung.

Weiter bevorzugt mündet die zweite Leitung, in welcher der zweite Sensor zur Feinleckmessung angeordnet ist, in den Zwischenleitungsbereich zwischen dem ersten und zweiten Ventil.

Gemäß einer weiteren bevorzugten Ausgestaltung der Erfindung umfasst die Prüfvorrichtung ein viertes Ventil, welches zwischen dem dritten Ventil und dem Spülanschluss angeordnet ist und eine Verbindung zur Atmosphäre ermöglicht. Somit kann über das vierte Ventil alternativ eine Verbindung zur Atmosphäre oder zu einem Spülmedium hergestellt werden. Das Spülmedium ist vorzugsweise in einem Spülmedium-Reservoir angeordnet und steht vorzugsweise unter Druck. Hierdurch kann ein schnelles Spülen der Prüfvorrichtung ermöglicht werden.

Gemäß einer weiteren bevorzugten Ausgestaltung der Erfindung umfasst die Prüfvorrichtung ferner ein fünftes Ventil, welches in der zweiten Leitung zwischen dem zweiten Sensor zur Feinleckmessung und der ersten Leitung angeordnet ist. Das fünfte Ventil ermöglicht es insbesondere bei der Feinleckmessung, dass das zusätzliche Volumen, welches für die Grobleckmessung vorhanden ist, bei der Feinleckmessung entkoppelt wird. Hierdurch wird eine Sensitivität während der Feinleckmessung weiter verbessert.

Gemäß einer weiteren bevorzugten Ausgestaltung umfasst die Prüfvorrichtung ferner ein sechstes Ventil, wobei das sechste Ventil in der zweiten Leitung angeordnet ist und die zweite Leitung eine Schleife bildet, in welcher der zweite Sensor zur Feinleckmessung und das fünfte Ventil angeordnet sind. Auch bei dieser Ausgestaltung kann eine vollständige Abkopplung des Feinleckmessbereichs der Prüfvorrichtung erreicht werden.

Weiter bevorzugt umfasst die Prüfvorrichtung auch die Prüfkammer, welche einen Hohlraum zur Aufnahme des zu prüfenden Behältnisses aufweist. Die Prüfkammer weist vorzugsweise ein erstes und zweites Kammerteil auf. Der Prüfanschluss verbindet den Hohlraum mit den eigentlichen Messanordnungen zur Grobleckmessung und Feinleckmessung.

Weiter bevorzugt umfasst die Prüfvorrichtung ein mit einem Spülmedium gefülltes Reservoir, welches direkt mit dem Hohlraum der Prüfkammer oder der dritten Leitung verbunden werden kann. Wenn das Reservoir mit dem Hohlraum der Prüfkammer verbunden ist, kann auf einfache Weise auch ein Spülen des Hohlraums der Prüfkammer erfolgen. Hierdurch können Verunreinigungen, welche beispielsweise durch das Einlegen des zu prüfenden Behältnisses in die Prüfkammer in das Prüfsystem kommen können, weggespült werden.

Weiter bevorzugt umfasst die Vorrichtung einen Atmosphärenanschluss, welcher mit der dritten Leitung und/oder der Prüfkammer verbunden ist. Hierdurch ist beispielsweise bei einer Verbindung mit der Prüfkammer ein Druckausgleich der Prüfkammer mit Luft möglich.

Gemäß einer weiteren bevorzugten Ausgestaltung umfasst die Prüfvorrichtung ferner einen dritten Sensor, welcher an der ersten Leitung zwischen dem Prüfkammeranschluss und dem zweiten Ventil angeordnet ist. Der dritte Sensor ist vorzugsweise ein Absolutdrucksensor. Der dritte Sensor kann insbesondere nach einer erfolgten Messung einen Druck in dem Hohlraum der Prüfkammer erfassen.

Weiter bevorzugt ist ein Filter zwischen dem Prüfanschluss und dem zweiten Ventil angeordnet. Hierdurch kann die eigentliche Prüfvorrichtung durch Verunreinigungen aus dem eingelegten Behältnis oder einem Leck im Behältnis geschützt werden.

Die Prüfkammer umfasst vorzugsweise ein erstes Aufnahmeteil und ein zweites Aufnahmeteil. Die Prüfkammer ist dabei vorzugsweise in einer Teilungsebene in Längsrichtung der Prüfkammer oder in Querrichtung der Prüfkammer unterteilt.

Vorzugsweise ist die erste Leitung am ersten Aufnahmeteil angeordnet. Wenn eine Spülung des Hohlraums der Prüfkammer erfolgen soll, ist vorzugsweise ein Spülanschluss am zweiten Aufnahmeteil der Prüfkammer angeordnet.

Weiterhin betrifft die vorliegende Erfindung ein Verfahren zum Überprüfen von Behältnissen auf Dichtheit mit einem zweistufigen Prüfverfahren. Das Verfahren umfasst dabei eine Grobleckmessung, mit welcher ein großes Leck im Behältnis erfasst werden kann und eine Feinleckmessung, mit welcher ein kleines Leck im Behältnis erfasst werden kann. Bei erfindungsgemäßen Verfahren wird hierbei zuerst die Grobleckmessung durchgeführt und nach erfolgter Grobleckmessung, wenn kein Grobleck erkannt wurde, die Feinleckmessung durchgeführt. Nach dem Ende der Feinleckmessung wird das zu prüfende Behältnis aus der Prüfkammer entnommen und es erfolgt ein Schritt des Spülens der Prüfvorrichtung mit einem Spülmedium, um Verunreinigungen fernzuhalten und möglicherweise in der Prüfvorrichtung durch den vorhergehenden Messvorgang vorhandene Verunreinigungen aus der Prüfvorrichtung auszuspülen.

Das erfindungsgemäße Verfahren wird besonders bevorzugt bei pharmazeutischen Behältnissen verwendet.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Ansicht einer Prüfvorrichtung gemäß einem ersten Ausführungsbeispiel der Erfindung,
- Figur 2: eine schematische Ansicht einer Prüfvorrichtung gemäß einem zweiten Ausführungsbeispiel der Erfindung,
- Figur 3: eine schematische Ansicht einer Prüfvorrichtung gemäß einem dritten Ausführungsbeispiel der Erfindung,
- Figur 4: eine schematische Ansicht einer Prüfvorrichtung gemäß einem vierten Ausführungsbeispiel der Erfindung,
- Figur 5: eine schematische Ansicht einer Prüfvorrichtung gemäß einem fünften Ausführungsbeispiel der Erfindung,
- Figur 6: eine schematische Ansicht einer Prüfvorrichtung gemäß einem sechsten, nicht erfindungsgemäßen Beispiel,
- Figur 7: eine schematische Ansicht einer Prüfvorrichtung gemäß einem siebten Ausführungsbeispiel der Erfindung,
- Figur 8: eine schematische Ansicht einer Prüfvorrichtung gemäß einem achten Ausführungsbeispiel der Erfindung, und
- Figur 9: eine schematische Ansicht einer Prüfvorrichtung gemäß einem neunten Ausführungsbeispiel der Erfindung.

### Bevorzugte Ausführungsformen der Erfindung

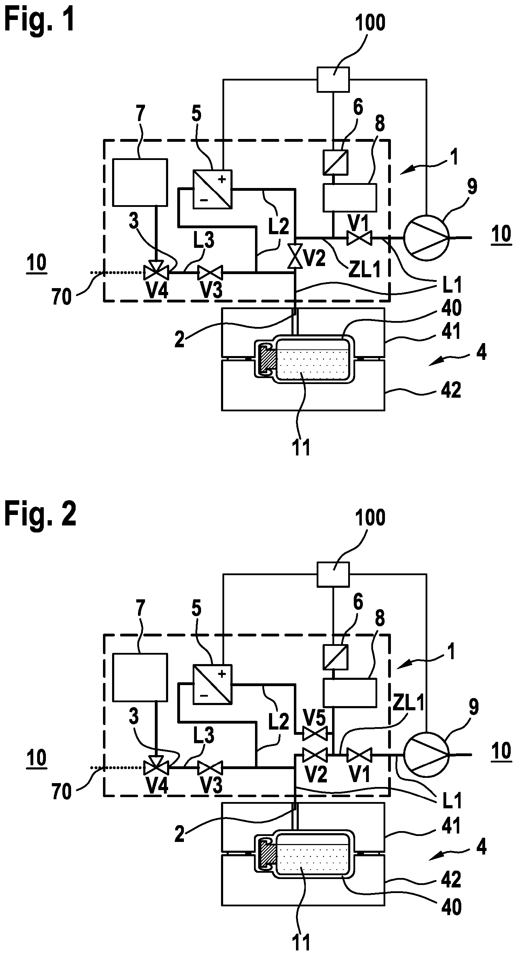

Nachfolgend wird unter Bezugnahme auf Figur 1 eine Prüfvorrichtung 1 gemäß einem ersten bevorzugten Ausführungsbeispiel der Erfindung im Detail beschrieben.

Wie aus Figur 1 ersichtlich ist, umfasst die Prüfvorrichtung 1 einen Prüfanschluss 2, an welche eine Prüfkammer 4 angeschlossen ist. Die Prüfkammer 4 umfasst einen ersten Kammerteil 41 und einen zweiten Kammerteil 42, welche zwischen sich einen Hohlraum 40 definieren. Im Hohlraum 40 ist ein zu prüfendes Behältnis 11 angeordnet.

In diesem Ausführungsbeispiel ist das zu prüfende Behältnis 11 ein pharmazeutisches Behältnis, welches auf Dichtheit überprüft werden muss. Die Prüfkammer 4 ist aufklappbar, um das zu prüfende Behältnis 11 in das Volumen 40 einzulegen und zu entnehmen. Wie aus Figur 1 ersichtlich ist, ist die Prüfkammer 4 hierbei in Längsrichtung der Prüfkammer unterteilt. Der Prüfanschluss 2 ist am ersten Kammerteil 41 angeordnet.

Die Prüfvorrichtung 1 umfasst ferner eine erste Leitung L1, welche vom Prüfanschluss 2 zu einer Unterdruckquelle 9 führt. Die Unterdruckquelle 9 ist ein Kompressor und führt zu einer Atmosphäre 10.

In der ersten Leitung L1 ist ein erstes Ventil V1 und ein zweites Ventil V2 angeordnet. Hierdurch bildet die erste Leitung L1 zwischen dem ersten Ventil V1 und dem zweiten Ventil V2 einen Zwischenleitungsbereich ZL1.

Die Prüfvorrichtung 1 umfasst ferner einen ersten Sensor 6 und einen zweiten Sensor 5. Der erste Sensor 6 ist zur Grobleckmessung vorgesehen und ist vorzugsweise ein Absolutdrucksensor. Der zweite Sensor 5 ist zur Feinleckmessung vorgesehen und ist vorzugsweise ein Differenzdrucksensor.

Wie aus Figur 1 ersichtlich ist, ist der erste Sensor 6 an der ersten Leitung angeordnet. Genauer, ist der erste Sensor 6 am Zwischenleitungsbereich ZL1 angeordnet. Wie aus Figur 1 ersichtlich ist, ist zwischen dem ersten Sensor 6 und dem Zwischenleitungsbereich ZL1 ein Vorvolumen 8 vorgesehen. Das Vorvolumen 8 weist ein Volumen auf, welches größer ist als ein Volumen der ersten Leitung L1 zwischen dem Prüfanschluss 2 und der Unterdruckquelle 9.

Die Größe des Vorvolumens 8 ist dabei derart gewählt, dass das Risiko einer Verschmutzung des ersten Sensors 6 möglichst klein ist. D.h., falls beispielsweise das zu prüfende Behältnis 11 ein Leck aufweist, würde das im Behältnis 11 vorhandene Medium durch die Ansaugwirkung der Unterdruckquelle 9 in die erste Leitung L1 und dabei auch in das Vorvolumen 8 strömen. Da der erste Sensor 6 nach einer relativ kurzen Messzeit erkennen würde, dass ein Leck im Behältnis 11 vorliegt, könnte die Messung abgebrochen werden, ohne dass das die Prüfvorrichtung 1 verunreinigende austretende Medium aus dem Behältnis 11 den ersten Sensor 6 erreicht und stark verschmutzt.

Die Prüfvorrichtung 1 umfasst ferner eine zweite Leitung L2, welche von der ersten Leitung L1 abzweigt. Wie aus Figur 1 ersichtlich ist, ist der zweite Sensor 5 in der zweiten Leitung L2 angeordnet. Weiterhin ist eine dritte Leitung L3 vorgesehen, welche von der zweiten Leitung L2 abzweigt. Die dritte Leitung führt zu einem Spülanschluss 3. Am Spülanschluss 3 ist ein Reservoir 7 für ein Spülmedium angeschlossen.

Ein drittes Ventil V3 ist in der dritten Leitung L3 angeordnet, um eine Verbindung zum Spülanschluss 3 freizugeben und zu verschließen.

Ferner ist in der dritten Leitung L3 ein viertes Ventil V4 angeordnet, welches wahlweise eine Verbindung mit dem Reservoir 7 oder einem Anschluss 70 zu einer Atmosphäre 10 ermöglicht. Dies ist in Figur 1 gestrichelt dargestellt.

Das Spülmedium im Reservoir 7 kann beispielsweise trockene Luft oder gefilterte Luft oder Stickstoff sein. Das Spülmedium im Reservoir 7 ist dabei vorgesehen, nach einem Messzyklus die Prüfvorrichtung 1 gezielt mit dem Spülmedium zu fluten und mögliche Verunreinigungen wie Feuchtigkeit oder Staub oder ein ausgetretenes Medium aus dem Behältnis 11 auszuspülen und/oder mögliche Verunreinigungen von der Prüfvorrichtung 1 und der Prüfkammer 4 fernzuhalten.

Es sei angemerkt, dass zu einer schnellen Belüftung und einem anschließenden Öffnen der Prüfkammer 4 das Spülmedium im Reservoir 7 unter einem hohen Druck gespeichert sein kann, so dass eine schlagartige Flutung der Prüfvorrichtung 1 möglich ist. Hierbei sei ferner angemerkt, dass, nachdem die Prüfvorrichtung mit dem Spülmedium aus dem Reservoir 7 oder alternativ auch mit Luft geflutet wurde, die Prüfkammer 4 geöffnet werden kann, um das geprüfte Behältnis 11 zu entnehmen. Hierbei ist sicherzustellen, dass das Spülmedium während des geöffneten Zustands der Prüfkammer 4 immer in ausreichender Menge nachströmt, damit Feuchtigkeit und/oder Staub und/oder andere Unreinheiten und/oder auch Wärme oder andere äußere Einflüsse nicht in die Prüfvorrichtung 1 eindringen können.

Da beim Auswechseln des zu prüfenden Behältnisses 11 im geöffneten Zustand der Prüfkammer 4 nicht vollständig ausgeschlossen werden kann, dass eine Verunreinigung der Prüfvorrichtung 1 erfolgt, kann auch ein gezielter Spülmedienvorhang und/oder ausgerichtete Spüldüsen, welche in der Prüfkammer 4 angeordnet sind, verwendet werden. Auch ist es möglich, dass ein zusätzlicher Spülstoß oder dgl. kurz vor einem Schließen der Prüfkammer 4 nach Einlegen eines neu zu prüfenden Behältnisses 11 vorgenommen werden kann, um eine Reinigung der Prüfkammer und des eingelegten Behältnisses 11 zu ermöglichen. Dadurch wird kurz vor dem Schließen der Prüfkammer 4 der Hohlraum 40 der Prüfkammer möglichst mit Spülmedium gefüllt, um das Eindringen von Feuchtigkeit und/oder Verunreinigungen und/oder die Einleitung von Wärme zu vermeiden.

Das erfindungsgemäße Verfahren zum Prüfen eines eingelegten Behältnisses 11 auf Dichtheit ist dabei wie folgt. In einem ersten Schritt werden das erste und zweite Ventil V1 und V2 geöffnet und das dritte Ventil V3 bleibt geschlossen. Die Unterdruckquelle 9 wird betrieben, so dass das in der ersten Leitung L1 und in der zweiten Leitung L2 befindliche Medium aus diesen Leitungen herausgesaugt wird. Ebenso wird der Hohlraum 40 der Prüfkammer 4 leergesaugt. Hierdurch herrscht ein Unterdruck im Hohlraum 40 der Prüfeinrichtung 1. Nach dem Leersaugvorgang wird das erste Ventil V1 geschlossen und mittels des ersten Sensors 6 eine Grobleckmessung durchgeführt. Sollte ein Leck im Behältnis 11 vorhanden sein, erfasst der erste Sensor 6 eine Abweichung des resultierenden Drucknivaus, insbesondere einen Druckanstieg in der ersten Leitung L1, wodurch auf ein großes Leck im Behältnis 11 geschlossen wird. Eine Steuereinheit 100 ermöglicht durch einen Vergleich der erfassten Druckwerte nach einer jeweils vorbestimmten abgelaufenen Zeit, ob ein Grobleck vorliegt oder nicht.

Wenn bestimmt ist, dass kein Grobleck vorliegt, wird die Unterdruckquelle 9 weiter betrieben, so dass die Prüfvorrichtung 1 eine Feinleckmessung ausführen kann. Hierzu ermittelt der zweite Sensor 5 in der zweiten Leitung L2 einen Druckverlauf, insbesondere einen Druckabbau, über die Zeit und die Steuereinheit 100 vergleicht diesen erfassten Druckverlauf, insbesondere einen Druckabbau, mit abgespeicherten Werten. Hierbei werden das erste und zweite Ventil V1 und V2 geschlossen. Bei Abweichungen wird auf ein Feinleck geschlossen und das Behältnis 11 wird als Ausschuss aussortiert.

Wenn kein Feinleck erfasst wurde, wird das Behältnis 11 als leckagefreies Behältnis eingestuft und der weiteren Verwendung zugeführt. Hierbei wird vor dem Öffnen der Prüfkammer 4 zur Entnahme des Behältnisses 11 das dritte Ventil V3 und das vierte Ventil V4 geöffnet. Das vierte Ventil V4 stellt dabei entweder eine Verbindung der dritten Leitung L3 mit dem Reservoir 7 für das unter Druck stehende Spülmedium oder der Atmosphäre 10 bereit. Wenn dann die Prüfkammer 4 geöffnet wird, strömt entweder Luft aus der Atmosphäre 10 in die dritte Leitung L3 und die restliche Prüfvorrichtung 1, oder Spülmedium aus dem Reservoir 7 in die dritte Leitung L3 und die restliche Prüfvorrichtung 1. Die Unterdruckquelle 9 wird dabei vorzugsweise nicht betrieben. Es sei jedoch angemerkt, dass es auch möglich ist, dass für ein vollständiges Spülen die Unterdruckquelle 9 betrieben wird und somit Spülmedium und/oder Luft ansaugt.

Zum ersten Ausführungsbeispiel sei ferner angemerkt, dass die Steuereinheit 100 auch die Unterdruckquelle 9 ansteuert. Auch kann die Steuereinheit 100 alle Ventile der Prüfvorrichtung 1 ansteuern, wobei aus Übersichtlichkeitsgründen in Figur 1 keine derartigen Steuerleitungen eingezeichnet sind.

Es sei ferner angemerkt, dass zur Gewährleistung einer möglichst sauberen Prüfvorrichtung 1 bereits vor einer Verwendung der Prüfvorrichtung 1 die Prüfkammer 4 geschlossen gehalten werden sollte. Hierbei kann die Prüfkammer 4 entweder unter Vakuum gesetzt werden oder vorzugsweise vorab mit dem Spülmedium aus dem Reservoir 7 gespült werden. Dadurch gelangt möglichst wenig Feuchtigkeit oder Verunreinigung oder dgl. in die Prüfvorrichtung 1. Auch wird dadurch eine Vorlaufzeit zur Wiederaufnahme eines Messzyklus signifikant reduziert.

Figur 2 zeigt eine Prüfvorrichtung 1 gemäß einem zweiten Ausführungsbeispiel der Erfindung. Im Unterschied zum ersten Ausführungsbeispiel weist die Prüfvorrichtung 1 des zweiten Ausführungsbeispiels ein fünftes Ventil V5 auf. Das fünfte Ventil V5 ist in der zweiten Leitung L2 angeordnet. Wie aus Figur 2 ersichtlich ist, zweigt die zweite Leitung L2 von der ersten Leitung L1 von einem Bereich zwischen dem Prüfanschluss 2 und dem zweiten Ventil V2 ab. Die zweite Leitung L2 mündet dann in den Zwischenleitungsbereich ZL1 zwischen dem ersten Ventil V1 und dem zweiten Ventil V2. Das fünfte Ventil V5 ist dabei zwischen dem zweiten Sensor 5 und dem Zwischenleitungsbereich ZL1 angeordnet. Das fünfte Ventil V5 ermöglicht insbesondere eine Trennung der zweiten Leitung L2 von der ersten Leitung L1 bei der Grobleckmessung. Weiterhin ermöglicht das fünfte Ventil V5 eine Erhöhung einer Sensitivität bei der Feinleckmessung durch eine Reduktion des Volumens, da insbesondere das Vorvolumen 8 bei der Feinleckmessung abgekoppelt wird. Ein weiterer Vorteil liegt darin, dass das Vorvolumen 8 während der Feinleckmessung durch die betriebene Unterdruckwelle 9 auch schon Vorevakuiert werden kann, wodurch eine Zykluszeit signifikant reduziert werden kann.

Während der Grobleckmessung sind das erste Ventil V1 und das fünfte Ventil V5 geschlossen. Das zweite Ventil V2 wird geöffnet. Somit wird der Hohlraum 40 der Prüfkammer 4 mit dem Vorvolumen 8 vereinigt und mittels des als Absolutdrucksensor ausgebildeten ersten Sensor 6 kann eine Grobleckmessung stattfinden. Nach erfolgter Grobleckmessung wird dann das erste Ventil V1 geöffnet, so dass der Hohlraum 40 der Prüfkammer 4 evakuiert werden kann, wobei das Ventil V3 geschlossen bleibt. Danach kann das zweite Ventil V2 und das fünfte Ventil V5 ebenfalls geschlossen werden. Dann kann mittels des zweiten Sensors 5 die Feinleckmessung durchgeführt werden.

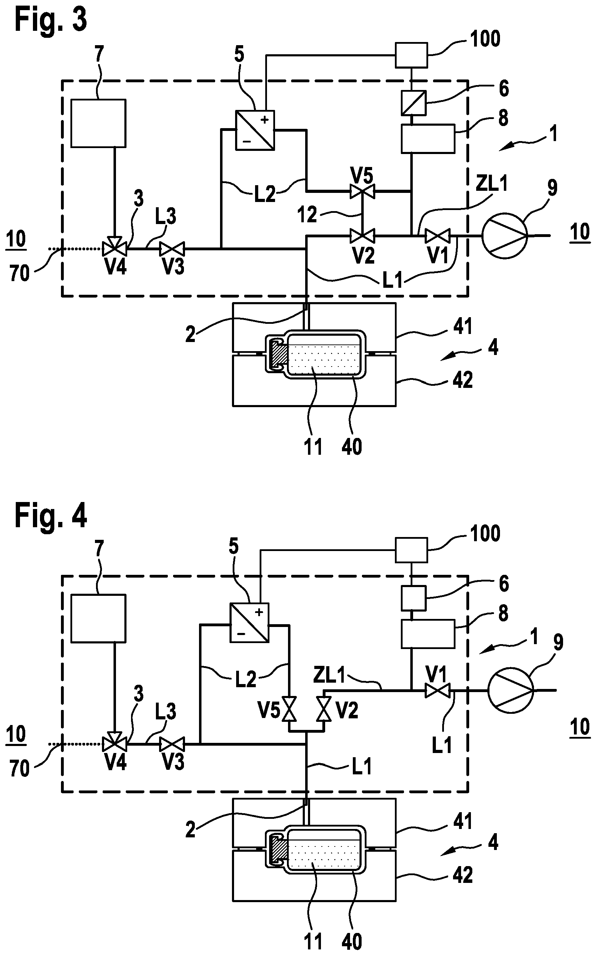

Figur 3 zeigt eine Prüfvorrichtung 1 gemäß einem dritten Ausführungsbeispiel der Erfindung. Das dritte Ausführungsbeispiel entspricht im Wesentlichen dem zweiten Ausführungsbeispiel, wobei im Unterschied zum zweiten Ausführungsbeispiel das zweite Ventil V2 und das fünfte Ventil V5 als Doppelventil ausgebildet sind. Hierbei sind das zweite Ventil V2 und das fünfte Ventil V5 mechanisch miteinander mittels eines Koppelelements 12 gekoppelt. Hierdurch können das zweite Ventil V2 und das fünfte Ventil V5 mit einer Schaltbewegung gleichzeitig gesperrt oder entsperrt werden. Somit kann das zweite Ventil V2 und das fünfte Ventil V5 für die Grobleckmessung und/oder die Feinleckmessung jeweils im gleichen Zustand, d.h., geöffnet oder geschlossen, gehalten werden.

Figur 4 zeigt eine Prüfvorrichtung 1 gemäß einem vierten Ausführungsbeispiel der Erfindung. Das vierte Ausführungsbeispiel entspricht im Wesentlichen dem zweiten Ausführungsbeispiel, wobei die zweite Leitung L2 im vierten Ausführungsbeispiel in die erste Leitung L1 in den Bereich zwischen dem Prüfanschluss 2 und dem zweiten Ventil V2 mündet. Die zweite Leitung V2 geht ebenfalls von der ersten Leitung L1 in diesen Bereich zwischen dem Prüfanschluss 2 und dem zweiten Ventil V2 ab.

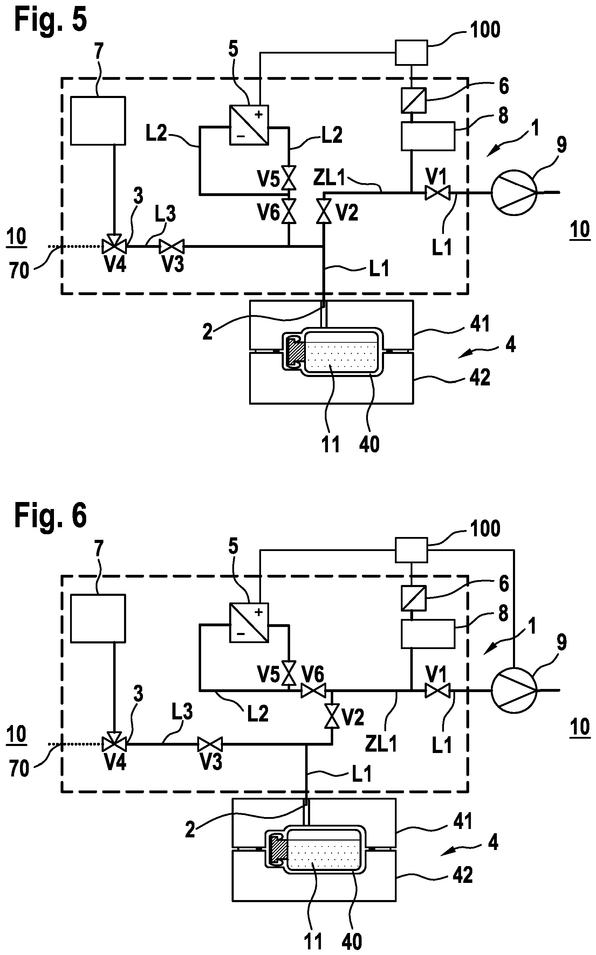

Figur 5 zeigt eine Prüfvorrichtung 1 gemäß einem fünften Ausführungsbespiel der Erfindung. Das fünfte Ausführungsbeispiel basiert auf dem ersten Ausführungsbeispiel, wobei im Unterschied zum ersten Ausführungsbeispiel beim fünften Ausführungsbeispiel die zweite Leitung L2 von der ersten Leitung in einem Bereich zwischen dem Prüfanschluss 2 und dem zweiten Ventil V2 abzweigt und an gleicher Stelle wieder mündet. Hierbei weist die zweite Leitung L2 einen geschlossenen Kreis auf, in welchem der zweite Sensor 5 und ein fünftes Ventil V5 angeordnet sind. In der gemeinsamen Zu- und Rückleitung ist ein sechstes Ventil V6 angeordnet (s. Figur 5). Bei dieser Ausgestaltung gemäß dem fünften Ausführungsbeispiel ist es somit möglich, dass eine vollständige Abkoppelung des Feinmesssensors durch das sechste Ventil V6 ermöglicht ist. Somit kann während der Grobleckprüfung der zweite Sensor 5 durch Schließen des sechsten Ventils V6 abgekoppelt werden. Das sechste Ventil V6 kann somit zu einem Zeitpunkt geöffnet werden, wenn während der Evakuierung ein für die Feinleckmessung geeignetes Druckniveau erreicht ist. Somit können noch während der Evakuierung das fünfte und sechste Ventil V5, V6 geöffnet werden. Wenn dann der Hohlraum 40 über das zweite Ventil V2 entkoppelt wird, wird im Anschluss zum Start der Feinleckmessung das fünfte Ventil V5 geschlossen. Nach dem Ende der Feinleckmessung sollte dann das sechste Ventil V6 vor einer Belüftung wieder geschlossen werden, so dass der zweite Sensor 5 immer unter Vakuum gehalten werden kann. In diesem Ausführungsbeispiel stellt somit das zweite Ventil V2 zuerst die Grobleckprüfung sicher und anschließend schottet das zweite Ventil V2 das definierte Vorvolumen 8 bei der Feinleckmessung ab, wodurch eine signifikante Erhöhung einer Sensitivität der Feinleckmessung erreicht wird.

Figur 6 zeigt eine Prüfvorrichtung gemäß einem sechsten Beispiel wobei das sechste Beispiel im Wesentlichen dem fünften Ausführungsbeispiel entspricht. Beim sechsten Beispiel ist ebenfalls ein geschlossener Kreislauf für die zweite Leitung L2 vorgesehen, in welcher der zweite Sensor 5 und das fünfte Ventil V5 angeordnet ist. Die gemeinsame Abzweigung und Mündung der zweiten Leitung L2 erfolgt dabei im Unterschied zum fünften Ausführungsbeispiel beim sechsten Beispiel in und aus dem Zwischenleitungsbereich ZL1 zwischen dem ersten Ventil V1 und dem zweiten Ventil V2. Ansonsten entspricht dieses Beispiel dem fünften Ausführungsbeispiel.

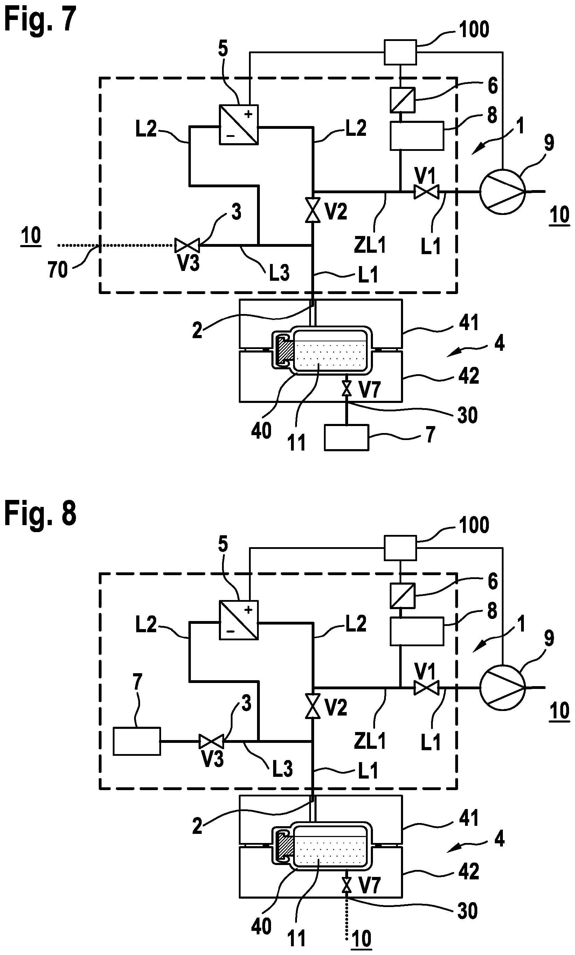

Figur 7 zeigt eine Prüfvorrichtung 1 gemäß einem siebten Ausführungsbeispiel der Erfindung. Wie aus Figur 7 ersichtlich ist, ist das Reservoir 7 für das Spülmedium beim siebten Ausführungsbeispiel direkt mit dem Hohlraum 40 in der Prüfkammer 4 über einen zweiten Spülanschluss 30 verbunden. Hierbei ist ein siebtes Ventil V7 zwischen dem Reservoir 7 und dem Hohlraum 40 angeordnet. Das dritte Ventil V3 ist zur Herstellung und Unterbrechung einer Verbindung zur Atmosphäre 10 vorgesehen. Das siebte Ausführungsbeispiel ermöglicht dabei, dass der mit Luft gefüllte Hohlraum 40 der Prüfkammer 4 durch die Verwendung eines zusätzlichen siebten Ventils V7 nach Schließen der Prüfkammer 4 mittels einer Spülmediums aus dem Reservoir 7 optimal gespült werden kann. Wie aus Figur 7 ersichtlich ist, ist ein Anschluss für das Reservoir 7 dabei am zweiten Kammerteil 42 der Prüfkammer 4 vorgesehen. Dadurch wird ein Austausch der im Volumen 40 der Prüfkammer 4 vorhandenen Luft durch das Spülmedium möglich.

Figur 8 zeigt eine Prüfvorrichtung 1 gemäß einem achten Ausführungsbespiel der Erfindung, welches im Wesentlichen dem siebten Ausführungsbeispiel entspricht. Beim achten Ausführungsbeispiel sind lediglich der Anschluss zur Atmosphäre 10 und zum Reservoir 7 für das Spülmedium vertauscht. Mit anderen Worten ist ein siebtes Ventil V7 vorgesehen, welches eine Verbindung mit der Atmosphäre 10 über das zweite Kammerteil 42 der Prüfkammer 4 herstellt und unterbricht. Das Reservoir 7 für das Spülmedium ist dabei am Spülanschluss 3, welcher über das dritte Ventil V3 geregelt wird, angeordnet. Ansonsten entspricht dieses Ausführungsbeispiel dem siebten Ausführungsbeispiel. Zudem kann das siebte Ventil V7 aktiv oder auch passiv geschaltet sein.

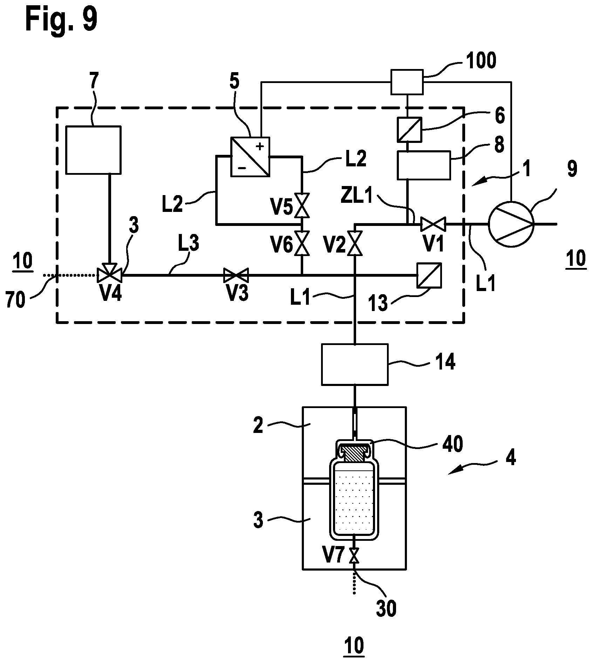

Figur 9 zeigt eine Prüfvorrichtung 1 gemäß einem neunten Ausführungsbespiel der Erfindung. Das neunte Ausführungsbeispiel basiert auf dem fünften Ausführungsbeispiel, bei dem die zweite Leitung L2 als abgeschlossene Leitung mit der ersten Leitung L1 verbunden ist. Hierbei kann die Anordnung zur Feinleckmessung durch das sechste Ventil V6 vollständig von der Grobleckmessung entkoppelt werden. Wie aus Figur 9 ersichtlich ist, ist der Hohlraum 40 der Prüfkammer 4 über das siebte Ventil V7 mit der Atmosphäre 10 verbindbar. Die Prüfkammer 4 ist hierbei nicht, wie bei den anderen Ausführungsbeispielen, in Längsrichtung der Prüfkammer durch die beiden Kammerteile 2, 3 unterteilt, sondern in Querrichtung. Ferner ist ein Filter 14 vorgesehen, welcher zwischen dem Prüfanschluss 2 und dem Abzweig der zweiten Leitung L2 angeordnet ist. Das neunte Ausführungsbeispiel weist weiter einen dritten Sensor 13 auf, welcher an der ersten Leitung L1 angeordnet ist. Der dritte Sensor 13 ist ein Absolutdrucksensor, um einen Druck im Hohlraum 40 der Prüfkammer 4 zu messen. Dies hat bei der Grobleckmessung den Vorteil, dass ein Druck in dem Einzelvolumen der Grobleckmessung durch den dritten Sensor 13 und den ersten Sensor 6 gemessen werden kann. Hierdurch kann ein Abgleich des ersten Sensors 6 und des dritten Sensors 13 erfolgen. Wie aus Figur 9 ersichtlich ist, wird zur Grobleckmessung dabei das zweite Ventil V2 geöffnet und das erste Ventil V1, das dritte Ventil V3, das sechste Ventil V6 und das siebte Ventil V7 geschlossen.

Beim neunten Ausführungsbeispiel ist der zweite Sensor 5 als Differenzdrucksensor ausgebildet. Es sei jedoch angemerkt, dass der zweite Sensor 5 auch als Absolutdrucksensor oder Relativdrucksensor vorgesehen werden kann. In diesem Fall ist dann das siebte Ventil V7 nicht notwendig.

Das vierte Ventil V4 ist als Drei-Zwei-Wege-Ventil ausgebildet.

Es sei ferner angemerkt, dass durch Schließen des zweiten Ventils V2 während der Feinleckmessung auch schon das Vorvolumen 8 für die Grobleckmessung durch vorzugsweise eine Unterdruckquelle 9 evakuiert werden kann. Hierdurch ergibt sich eine Zeitersparnis für die Messung des nächsten Behältnisses 11. Das sechste Ventil V6 ist in diesem Ausführungsbeispiel nicht zwingend notwendig, wird aber bevorzugt zur Sauberhaltung des zweiten Sensors 5 vorgesehen. Während des offenen Zustands der Prüfkammer 4 ist es ferner möglich, dass durch Öffnen des dritten Ventils V3 und des vierten Ventils V4 Spülmedium aus dem Reservoir 7) konstant nachströmt, um möglichst alle äußeren Einflüsse vom Messsystem fernzuhalten.

Zu allen Ausführungsbeispielen sei ferner angemerkt, dass es auch möglich ist, dass an der Prüfkammer 4 Düsen vorgesehen sind, um durch einen gezielten Spülstoß kurz vor Schließen der Prüfkammer der Hohlraum 40 der Prüfkammer 4 zu spülen, um mögliche Verunreinigungen aus der Prüfkammer 4 zu entfernen.

Weiter bevorzugt sei zu allen Ausführungsbeispielen angemerkt, dass für genaue Messergebnisse nach dem Schließen der Prüfkammer 4 der Druck in der Prüfkammer 4 möglichst dem Umgebungsdruck entspricht. Dies kann beispielsweise durch das Vorsehen der Verbindung des Hohlraums 40 der Prüfkammer mit der Atmosphäre über das siebte Ventil V7 oder über die dritten und vierten Ventile V3, V4 realisiert werden.

## Patentansprüche

1. Prüfvorrichtung, umfassend:
- einen Prüfanschluss (2), welcher eingerichtet ist, mit einer Prüfkammer (4) verbunden zu werden, in welcher ein auf Dichtheit zu prüfendes Behältnis (11) aufgenommen ist,
- eine Unterdruckquelle (9), die mit dem Prüfanschluss (2) über eine erste Leitung (L1) verbunden ist,
- ein erstes Ventil (V1) und ein zweites Ventil (V2), welche in der ersten Leitung (L1) angeordnet sind, wobei das erste Ventil (V1) ausgehend von der Unterdruckquelle (9) vor dem zweiten Ventil (V2) angeordnet ist, wobei die erste Leitung (L1) zwischen dem ersten Ventil (V1) und dem zweiten Ventil (V2) einen Zwischenleitungsbereich (ZL1) aufweist,
- einen ersten Sensor (6) für eine Grobleckmessung, welche an der ersten Leitung (L1) angeordnet ist,
- einen zweiten Sensor (5) für eine Feinleckmessung,
- eine zweite Leitung (L2), welche von der ersten Leitung (L1) abzweigt, wobei der zweite Sensor (5) in der zweiten Leitung (L2) angeordnet ist,
- eine dritte Leitung (L3), welche von der ersten Leitung (L1) oder der zweiten Leitung (L2) abzweigt und zu einem Spülanschluss (3) führt, und
- ein drittes Ventil (V3), welches in der dritten Leitung (L3) angeordnet ist, um die Verbindung zum Spülanschluss (3) freizugeben und zu verschließen,
**dadurch gekennzeichnet, dass**
die zweite Leitung (L2) von der ersten Leitung (L1) in einem Bereich zwischen dem Prüfanschluss (2) und dem zweiten Ventil (V2) abzweigt.

2. Prüfvorrichtung nach Anspruch 1, wobei der erste Sensor (6) am Zwischenleitungsbereich (ZL1) angeordnet ist.

3. Prüfvorrichtung nach einem der vorhergehenden Ansprüche, ferner umfassend ein definiertes Vorvolumen (8), welches zwischen dem ersten Sensor (6) und der ersten Leitung (L1) angeordnet ist.

4. Prüfvorrichtung nach einem der vorhergehenden Ansprüche, wobei die zweite Leitung (L2) in den Zwischenleitungsbereich (ZL1) zwischen dem ersten Ventil (V1) und dem zweiten Ventil (V2) mündet.

5. Prüfvorrichtung nach einem der vorhergehenden Ansprüche, ferner umfassend ein viertes Ventil (V4), welches am Spülanschluss (3) angeordnet ist, um eine Verbindung zur Atomsphäre (10) oder eine Verbindung zu einem Reservoir (7) für ein Spülmedium zu ermöglichen.

6. Prüfvorrichtung nach einem der vorhergehenden Ansprüche, ferner umfassend ein fünftes Ventil (V5), welches in der zweiten Leitung (L2) zwischen dem zweiten Sensor (5) und der ersten Leitung (L1) angeordnet ist.

7. Prüfvorrichtung nach einem der vorhergehenden Ansprüche, ferner umfassend ein sechstes Ventil (V6), welches in der zweiten Leitung (L2) angeordnet ist, wobei die zweite Leitung (L2) eine geschlossene Schleife bildet, in welcher der zweite Sensor (5) angeordnet ist.

8. Prüfvorrichtung nach einem der vorhergehenden Ansprüche, ferner umfassend einen dritten Sensor (13), welcher an der ersten Leitung (L1) zwischen dem Prüfanschluss (2) und dem zweiten Ventil (V2) angeordnet ist.

9. Verfahren zum Überprüfen von Behältnissen (11) auf Dichtheit, umfassend die Schritte:
- Einlegen des zu prüfenden Behältnisses (11) in eine verschließbare Prüfkammer (4),
- Erzeugen eines Unterdrucks in der Prüfkammer (4), und
- Durchführen einer Grobleckmessung, ob das Behältnis (11) ein großes Leck aufweist, mittels eines ersten Sensors (6), welcher an einer ersten Leitung (L1) angeordnet ist,
- wenn die Großbleckmessung kein Leck im Behältnis (11) erfasst hat, Durchführen einer Feinleckmessung mittels eines zweiten Sensors (5), welcher in einer zweiten Leitung (L2) angeordnet ist,
- wobei die erste Leitung (L1) eine Unterdruckquelle (9) mit einem Prüfanschluss (2), welcher eingerichtet ist, mit der Prüfkammer (4) verbunden zu werden, verbindet,
- wobei die zweite Leitung (L2) von der ersten Leitung (L1) abzweigt,
- wobei vor dem Durchführen der Grobleckmessung ein Spülen der Prüfeinrichtung mit einem Spülmedium erfolgt, um die Prüfvorrichtung (1) frei von Verunreinigungen und äußeren Einflüssen, insbesondere Wärmeeinflüssen, zu halten,
**dadurch gekennzeichnet, dass**
das Verfahren mit einer Prüfvorrichtung nach einem der vorhergehenden Ansprüche durchgeführt wird.

## Claims

1. A test device comprising:
- a test port (2) which is configured to be connected to a test chamber (4) in which a container (11) to be tested for leaks is housed,
- a vacuum source (9) which is connected to the test port (2) via a first line (L1),
- a first valve (V1) and a second valve (V2), which are arranged in the first line (L1), wherein the first valve (V1) is arranged upstream of the second valve (V2) starting from the vacuum source (9), wherein the first line (L1) has an intermediate line region (ZL1) between the first valve (V1) and the second valve (V2),
- a first sensor (6) for a coarse leak measurement, which is arranged on the first line (L1),
- a second sensor (5) for fine leak measurement,
- a second line (L2) which branches off from the first line (L1), wherein the second sensor (5) is arranged in the second line (L2),
- a third line (L3) which branches off from the first line (L1) or the second line (L2) and leads to a flushing port (3), and
- a third valve (V3) which is arranged in the third line (L3) in order to open and close the connection to the flushing port (3),
**characterized in that**
the second line (L2) branches off from the first line (L1) in a region between the test port (2) and the second valve (V2).

2. The test device according to claim 1, wherein the first sensor (6) is arranged at the intermediate line region (ZL1).

3. The test device according to any of the preceding claims, further comprising a defined pre-volume (8) which is arranged between the first sensor (6) and the first line (L1).

4. The test device according to any of the preceding claims, wherein the second line (L2) opens into the intermediate line region (ZL1) between the first valve (V1) and the second valve (V2).

5. The test device according to any of the preceding claims, further comprising a fourth valve (V4) which is arranged on the flushing port (3) in order to make possible a connection to the atmosphere (10) or a connection to a reservoir (7) for a flushing medium.

6. The test device according to any of the preceding claims, further comprising a fifth valve (V5) which is arranged in the second line (L2) between the second sensor (5) and the first line (L1).

7. The test device according to any of the preceding claims, further comprising a sixth valve (V6), which is arranged in the second line (L2), wherein the second line (L2) forms a closed loop in which the second sensor (5) is arranged.

8. The test device according to any of the preceding claims, further comprising a third sensor (13) which is arranged on the first line (L1) between the test port (2) and the second valve (V2).

9. A method for checking containers (11) for leaks, comprising the steps of:
- placing the container to be tested (11) in a sealable test chamber (4),
- generating a negative pressure in the test chamber (4), and
- performing a coarse leak measurement to determine whether the container (11) has a large leak by means of a first sensor (6), which is arranged on a first line (L1),
- if the large-plate measurement has not detected a leak in the container (11), performing a fine leak measurement by means of a second sensor (5), which is arranged in a second line (L2),
- wherein the first line (L1) connects a vacuum source (9) to a test port (2), which is configured to be connected to the test chamber (4),
- wherein the second line (L2) branches off from the first line (L1),
- wherein, prior to performing the coarse leak measurement, the test device is flushed with a flushing medium in order to keep the test device (1) free from contamination and external influences, in particular heat influences,
**characterized in that**
the method is performed with a test device according to any of the preceding claims.

## Revendications

1. Dispositif de contrôle, comprenant :
- un raccord de contrôle (2), lequel est conçu pour être relié à une chambre de contrôle (4) dans laquelle est logé un contenant (11) dont l'étanchéité doit être contrôlée,
- une source de dépression (9), qui est reliée au raccord de contrôle (2) par l'intermédiaire d'une première conduite (L1),
- une première soupape (V1) et une deuxième soupape (V2), lesquelles sont disposées dans la première conduite (L1), la première soupape (V1) étant disposée en amont de la deuxième soupape (V2) à partir de la source de dépression (9), la première conduite (L1) présentant une région de conduite intermédiaire (ZL1) entre la première soupape (V1) et la deuxième soupape (V2),
- un premier capteur (6) pour une mesure de fuite importante, lequel est disposé au niveau de la première conduite (L1),
- un deuxième capteur (5) pour une mesure de petite fuite,
- une deuxième conduite (L2), laquelle bifurque à partir de la première conduite (L1), le deuxième capteur (5) étant disposé dans la deuxième conduite (L2),
- une troisième conduite (L3), laquelle bifurque à partir de la première conduite (L1) ou de la deuxième conduite (L2) et mène jusqu'à un raccord de rinçage (3), et
- une troisième soupape (V3), laquelle est disposée dans la troisième conduite (L3), afin de libérer et de fermer la liaison avec le raccord de rinçage (3),
**caractérisé en ce que**
la deuxième conduite (L2) bifurque à partir de la première conduite (L1) dans une région entre le raccord de contrôle (2) et la deuxième soupape (V2).

2. Dispositif de contrôle selon la revendication 1, dans lequel le premier capteur (6) est disposé au niveau de la région de conduite intermédiaire (ZL1).

3. Dispositif de contrôle selon l'une des revendications précédentes, comprenant en outre un volume préliminaire (8) défini, lequel est disposé entre le premier capteur (6) et la première conduite (L1).

4. Dispositif de contrôle selon l'une des revendications précédentes, dans lequel la deuxième conduite (L2) débouche dans la région de conduite intermédiaire (ZL1) entre la première soupape (V1) et la deuxième soupape (V2).

5. Dispositif de contrôle selon l'une des revendications précédentes, comprenant en outre une quatrième soupape (V4), laquelle est disposée au niveau du raccord de rinçage (3), afin de permettre une liaison avec l'atmosphère (10) ou une liaison avec un réservoir (7) pour un milieu de rinçage.

6. Dispositif de contrôle selon l'une des revendications précédentes, comprenant en outre une cinquième soupape (V5), laquelle est disposée dans la deuxième conduite (L2) entre le deuxième capteur (5) et la première conduite (L1).

7. Dispositif de contrôle selon l'une des revendications précédentes, comprenant en outre une sixième soupape (V6), laquelle est disposée dans la deuxième conduite (L2), la deuxième conduite (L2) formant une boucle fermée dans laquelle le deuxième capteur (5) est disposé.

8. Dispositif de contrôle selon l'une des revendications précédentes, comprenant en outre un troisième capteur (13), lequel est disposé au niveau de la première conduite (L1) entre le raccord de contrôle (2) et la deuxième soupape (V2).

9. Procédé permettant de vérifier l'étanchéité de contenants (11), comprenant les étapes consistant à :
- introduire le contenant (11) à contrôler dans une chambre de contrôle (4) pouvant être fermée,
- générer une dépression dans la chambre de contrôle (4), et
- mettre en œuvre une mesure de fuite importante, afin de déterminer si le contenant (11) présente une fuite importante, à l'aide d'un premier capteur (6), lequel est disposé au niveau d'une première conduite (L1),
- si la mesure de fuite importante n'a détecté aucune fuite dans le contenant (11), mettre en œuvre une mesure de petite fuite à l'aide d'un deuxième capteur (5), lequel est disposé dans une deuxième conduite (L2),
- dans lequel la première conduite (L1) relie une source de dépression (9) à un raccord de contrôle (2), lequel est conçu pour être relié à la chambre de contrôle (4),
- dans lequel la deuxième conduite (L2) bifurque à partir de la première conduite (L1),
- dans lequel, avant la mise en œuvre de la mesure de fuite importante, un rinçage du dispositif de contrôle avec un milieu de rinçage a lieu, afin de maintenir le dispositif de contrôle (1) dépourvu d'impuretés et d'influences externes, en particulier d'influences de la chaleur,
**caractérisé en ce que**
le procédé est mis en œuvre à l'aide d'un dispositif de contrôle selon l'une des revendications précédentes.
